# EUROPEAN PATENT SPECIFICATION

(11) **EP 4 283 073 B1**
(45) Date of publication and mention of the grant of the patent: **02.10.2024**
(21) Application number: 22206236.6
(22) Date of filing: 08.11.2022
(51) Int. Cl.: E04G 23/02, E04H 9/02

(54) **ELASTIC ADAPTIVE CAULKING RESTORING APPARATUS AND CAULKING RESTORING METHOD**
VORRICHTUNG ZUR ELASTISCHEN ADAPTIVEN VERSTEMMUNGSWIEDERHERSTELLUNG UND VERFAHREN ZUR WIEDERHERSTELLUNG VON VERSTEMMUNG
APPAREIL DE RESTAURATION DE CALFEUTRAGE ADAPTATIF ÉLASTIQUE ET PROCÉDÉ DE RESTAURATION DE CALFEUTRAGE

(30) Priority: 24.05.2022 CN 202210567137
(43) Date of publication of application: 29.11.2023
(73) Proprietor: China Three Gorges Co., Ltd., Wuhan Hubei 430010 (CN)
(72) Inventor: GAO, Chao, Wuhan, 430010 (CN); WANG, Zhiwei, Wuhan, 430010 (CN); LI, Yuxin, Wuhan, 430010 (CN); YU, Jie, Wuhan, 430010 (CN); ZHUANG, Yufei, Wuhan, 430010 (CN)
(74) Representative: Barker Brettell LLP

(56) References cited:
- CN-A- 114 086 794
- US-A1- 2017 350 152

## Description

### TECHNICAL FIELD

The present invention relates to the field of construction reinforcement technologies, and specifically to an elastic adaptive caulking restoring apparatus and a caulking restoring method.

### BACKGROUND

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

Disclosed in an existing technology (see CN 114 086 794 B) is a longitudinal caulking and monitoring restoring apparatus, including: a first panel, provided with a plurality of guide holders; a second panel, arranged opposite to the first panel; a stranded wire, wound on the guide holders, where a first end of the stranded wire is connected to a stranded wire end holder, the stranded wire end holder is fixedly connected to the second panel, a second end of the stranded wire extends into the space between the second panel and the first panel and is connected to a fastening apparatus, and the fastening apparatus is capable of tightening and releasing the stranded wire; four groups of elastic assemblies, arranged between the first panel and the second panel and being respectively close to corners of the second panel, where a first end of the elastic assembly is fixedly connected to the first panel, and a second end of the elastic assembly is fixedly connected to the second panel; and two groups of air columns, where a connecting line of one group of air columns intersects a connecting line of the other group of air columns to form a cross, each group of air columns includes two air columns, the first panel is provided with one air channel corresponding to each air column and an air slot in communication with a first end of the air channel, the air column is an elastic hollow column with an opening at a first end and a closed second end, the first panel is provided with a first limit groove around the air slot, the first end of the air column is inserted in the first limit groove, the opening is opposite to the air slot, the second end of the air column abuts against the second panel, a second end of the air channel is provided with an air nozzle, and the air nozzle is connected to an air pressure gauge.

The foregoing existing technology can implement caulking and have the functions of gap deformation monitoring and seismic gap restoration. However, the foregoing existing technology ignores the problem that two sidewalls of a gap are not absolutely flat and is not applicable to caulking when sidewalls of a gap are not flat, resulting in a narrow application range.

### SUMMARY

Therefore, a technical problem to be resolved by the present invention is to overcome the disadvantage that the longitudinal caulking and monitoring restoring apparatus in the existing technology is not applicable to caulking when sidewalls of a gap are not flat, and provide an elastic adaptive caulking restoring apparatus and a caulking restoring method that can adapt to caulking when sidewalls of a gap are not flat.

To resolve the foregoing technical problem, the present invention provides an elastic adaptive caulking restoring apparatus, including: a cushioning pad; and two adaptive plates, symmetrically distributed on two sides of the cushioning pad, where each adaptive plate includes a panel, elastic posts, and springs, the panel includes a bottom cover close to the cushioning pad and a top cover away from the cushioning pad, a plurality of rows and a plurality of columns of elastic post holes are provided in an array in the top cover, spring seats having a one-to-one correspondence with the elastic post holes are distributed in an array in the panel, a first end of each spring seat is fixedly arranged on the bottom cover, a second end of the spring seat is located in a corresponding elastic post hole and is flush with an outer surface of the top cover, an expansion groove is provided in each spring seat, a first end of the expansion groove is located at the second end of the spring seat, a second end of the expansion groove is located in the spring seat, an air blow cavity is provided in each spring seat, a first end of the air blow cavity extends to the first end of the spring seat, a second end of the air blow cavity extends into the expansion groove, a push member is arranged in the air blow cavity, the push member is movable in a length direction of the air blow cavity, the push member is configured to press the expansion groove or press a cavity wall of the air blow cavity close to the second end of the air blow cavity, an air passage structure in communication with each air blow cavity is arranged in the bottom cover, the air passage structure includes a limit air nozzle protruding from the panel, the elastic post includes a post body and a post cap, the post body is a hollow structure and is arranged on an exterior of a corresponding spring seat, each post cap is arranged at an end of the post body, each spring is arranged in a corresponding post body, one end of the spring abuts against the second end of the spring seat, and the other end of the spring abuts against the post cap; a plurality of groups of electromagnets, where each group of electromagnets includes two electromagnets arranged opposite to each other and respectively arranged on the two sides of the cushioning pad; and a controller, respectively electrically connected to each electromagnet.

Optionally, each air blow cavity has a frustum shape, an area of the second end of the air blow cavity is less than an area of the first end of the air blow cavity, correspondingly, each push member has a frustum shape, an area of a smaller end of the push member is slightly greater than the area of the second end of the air blow cavity, an area of a larger end of the push member is less than the area of the first end of the air blow cavity, and a length of the push member is less than a length of the air blow cavity.

Optionally, a cavity is formed between the bottom cover and the top cover, each spring seat is located in the cavity, each elastic post further includes an annular post base fixedly arranged at an end of the post body away from the post cap, and the annular post base is sleeved over the spring seat and is movably located between a top wall and a bottom wall of the cavity.

Optionally, the expansion groove is a cross-shaped groove.

Optionally, the air passage structure includes:
sub-air passages, each in communication with a corresponding air blow cavity, where the sub-air passages are perpendicular to the bottom cover;
a plurality of branch air passages, each branch air passage is in communication with sub-air passages in one column, and the branch air passages are parallel to an outer surface of the bottom cover facing the cushioning pad; and
one main air passage, where the main air passage is in communication with the plurality of branch air passages, the main air passage is perpendicular to the branch air passage and is parallel to the outer surface of the bottom cover facing the cushioning pad, and the limit air nozzle is connected to the main air passage

Optionally, a plurality of first limit grooves are provided in the porous plate, and the electromagnets are arranged in the first limit grooves.

Optionally, a second limit groove is further provided in the bottom cover, the cushioning pad is arranged in the second limit groove, each first limit groove is provided at a groove bottom of the second limit groove, and a depth of the first limit groove is equal to a thickness of the electromagnet.

Optionally, four groups of electromagnets are arranged and are respectively arranged near four corners of the bottom cover; and/or
two controllers are arranged and are respectively arranged on two panels, and each controller is respectively electrically connected to a plurality of electromagnets arranged on the same side of the cushioning pad.

Optionally, the cushioning pad has a hollow cavity, an air hole in communication with the hollow cavity is provided in a sidewall of the cushioning pad, and the sidewall of the cushioning pad has a corrugated shape.

The present invention further provides a caulking restoring method, applied to the elastic adaptive caulking restoring apparatus, where the caulking restoring method includes:
S1. compressing the cushioning pad to make a total thickness of the elastic adaptive caulking restoring apparatus less than a width of a gap to be caulked;
S2. inserting the elastic adaptive caulking restoring apparatus into the gap, and releasing the compression of the cushioning pad, where at least part of the elastic posts and the springs therein are compressed by a sidewall of the gap;
S3. externally connecting an air pump to the limit air nozzle to feed high-pressure air into the air passage structure, where the air enters each air blow cavity to blow up the push member, the push member presses the expansion groove, and the expansion groove expands outward to tightly press the elastic post, so that a position of the elastic post is locked in each elastic post hole; and
S4. energizing the electromagnets to make two opposite electromagnets have the same polarity, recording a real-time value of repulsion between each group of electromagnets as an initial value of deformation monitoring of a gap node construction member, and simultaneously recording a real-time value of a magnetic force of each electromagnet as a backtracking value for stopping restoring support; and
when the gap has undergone changes in position and shape, the caulking restoring method further includes:
   S5. adjusting a spacing between the two adaptive plates by adjusting magnitude and polarity of magnetic forces of the groups of opposite electromagnets; and
   S6. adjusting the magnetic force of each electromagnet to the backtracking value, and observing the repulsion between each group of electromagnets and repeating the step S5 until the repulsion between each group of electromagnets reaches the initial value.

The technical solution in the present invention has the following advantages:
In the elastic adaptive gap insertion reset apparatus provided in the present invention, a cushioning pad is arranged between two adaptive plates. The cushioning pad has both the damping function and the function of connecting the two adaptive plates, so that the damping in construction nodes can be increased, and the energy consumption capability and the shock resistance capability of the nodes in earthquakes can be increased. During use, pressure may be applied to panels on left and right sides of the entire elastic adaptive gap insertion reset apparatus, to compress the cushioning pad. When the thickness of the entire elastic adaptive gap insertion reset apparatus is less than the width of a gap to be caulked, the elastic adaptive gap insertion reset apparatus may be readily caulked in the gap. After the elastic adaptive gap insertion reset apparatus is caulked in the gap, the pressure on the panels is released, that is, the compression of the cushioning pad is released. A compression amount of the cushioning pad is released. The elastic posts and the springs therein are partially compressed according to the flatness of the two sidewalls of the gap, to complete the adaptive adjustment for nonplanar sidewalls. Next, an air pump is externally connected to a limit air nozzle to feed high-pressure air into the air passage structure. The high-pressure air enters each air blow cavity through the air passage structure to blow up the push member. The push member presses the expansion groove or presses a cavity wall of the air blow cavity close to a second end of the air blow cavity. The expansion groove expands outward to tightly press the inner wall of the post body. The structures on two sides of the expansion groove press the post body and has large force of friction with the inner wall of the post body to tightly press the elastic post, so that a position of the adaptively adjusted elastic post is locked in each elastic post hole. Next, the electromagnets are energized to keep the polarity of each group of opposite electromagnets the same, the real-time value of the repulsion between each group of opposite electromagnets is recorded as an initial value of deformation monitoring of a gap node construction member, and simultaneously a real-time value of a magnetic force of each electromagnet is recorded as a backtracking value for stopping restoring support. During an earthquake, the cushioning pad provides adequate damping, thereby improving the energy consumption capability and the shock resistance capability of the nodes in earthquakes. After the earthquake occurs, the gap has undergone changes in position and shape, the magnitude and polarity of magnetic forces of one group of opposite electromagnets are first controlled to make the electromagnets repel or attract each other with a relatively large magnetic force, to drive the adjustment of the spacing between adaptive plates. Next, the magnetic force value of each electromagnet is adjusted to the backtracking value, and the repulsion between each group of opposite electromagnets is observed. The adjustment is stopped if the initial value is reached, and the adjustment continues if the initial value is not reached, until the repulsion between each group of electromagnets reaches the initial value. When the initial value is reached, it indicates that the spacing of the gap returns to the state before deformation, and the member is restored. Therefore, the elastic adaptive gap insertion reset apparatus has functions such as caulking, monitoring, and restoring and has high adaptability to nonplanar complex gap sidewalls such as rough and uneven surfaces and voids and pits.

### BRIEF DESCRIPTION OF THE DRAWINGS

To describe the technical solutions in specific embodiments of the present invention or the prior art more clearly, the following briefly introduces the accompanying drawings required for describing the specific embodiments or the prior art. Apparently, the accompanying drawings in the following description show some embodiments of the present invention, and a person of ordinary skill in the art may still derive other drawings from these accompanying drawings without creative efforts.
FIG. 1 is a schematic structural diagram of an elastic adaptive caulking restoring apparatus according to Embodiment 1 of the present invention;
FIG. 2 is an exploded view of the elastic adaptive caulking restoring apparatus shown in FIG. 1;
FIG. 3 is a front view of a panel in FIG. 2;
FIG. 4 is an enlarged view of A in FIG. 3;
FIG. 5 is a cross-sectional view along A-A in FIG. 3;
FIG. 6 is an enlarged view of B in FIG. 5;
FIG. 7 is a side view of a panel in FIG. 2;
FIG. 8 is a cross-sectional view along B-B in FIG. 7;
FIG. 9 is a cross-sectional view along C-C in FIG. 7;
FIG. 10 is a schematic structural diagram of an adaptive plate in FIG. 2;
FIG. 11 is a perspective view of an adaptive plate in FIG. 2;
FIG. 12 is a top view of a cushioning pad; and
FIG. 13 is a cross-sectional view along D-D in FIG. 12.

Reference numerals:
1. cushioning pad; 101. bottom plate; 102. air hole; 2. adaptive plate; 201. panel; 2011. bottom cover; 2012. top cover; 2013. elastic post hole; 2014. spring seat; 2015. expansion groove; 2016. air blow cavity; 2017. push member; 2018. limit air nozzle; 2019. cavity; 20110. sub-air passage; 20111. branch air passage; 20112. main air passage; 20113. first limit groove; 20114. second limit groove; 202. elastic post; 2021. post body; 2022. post cap; 2023. annular post base; 203. spring; 3. electromagnet; and 4. controller.

### DETAILED DESCRIPTION

The following clearly and completely describes the technical solutions of the present invention with reference to the accompanying drawings. Apparently, the described embodiments are merely some rather than all of the embodiments of the present invention.

In the description of the present invention, it needs to be understood that orientation or location relationships indicated by terms "center", "up", "down", "left", "right", "vertical", "horizontal", "inside", and "outside" are based on orientation or location relationships shown in the accompanying drawings, and are only used to facilitate description of the present invention and simplify description, but are not used to indicate or imply that the apparatuses or elements must have specific orientations or are constructed and operated by using specific orientations, and therefore, cannot be understood as a limit to the present invention. In addition, the terms "first", "second", and "third" are used only for description, but are not intended to indicate or imply relative importance.

In the description of the present invention, it needs to be noted that unless otherwise expressly specified and defined, "mounted", "connected", and "connection", should be understood in a broad sense, for example, fixedly connected, detachably connected or integrally connected; or mechanically connected or electrically connected; or connected directly or indirectly through an intermediate, or two elements communicated internally. For a person of ordinary skill in the art, specific meanings of the terms in the present invention should be understood according to specific cases.

### Embodiment 1

Structural gaps are common in industrial and civil construction in civil engineering. There are generally two types of gaps: cracks such as structural cracks, brittle fracture cracks, and settlement cracks caused by stress overload structural damage; and construction gaps, that is, gaps specially pre-designed for construction requirements, for example, seismic joints and temperature expansion joints in modem structures and gaps reserved for easy installation between mortise and tenon nodes in conventional wood construction. Although some gaps are essential for construction, the presence of gaps poses potential safety risks to the structural safety, especially potential safety risks under the effect of earthquakes. For example, for beam-column nodes, when there are gaps in the nodes, the stiffness and bearing capacity of the nodes are significantly reduced.

A longitudinal caulking and monitoring restoring apparatus disclosed in an existing technology ignores the problem that two sidewalls of a gap are not absolutely flat and is not applicable to caulking when sidewalls of a gap are not flat, resulting in a narrow application range.

For this, this embodiment provides an elastic adaptive gap insertion reset apparatus. The elastic adaptive gap insertion reset apparatus can adapt to caulking when sidewalls of a gap are not flat.

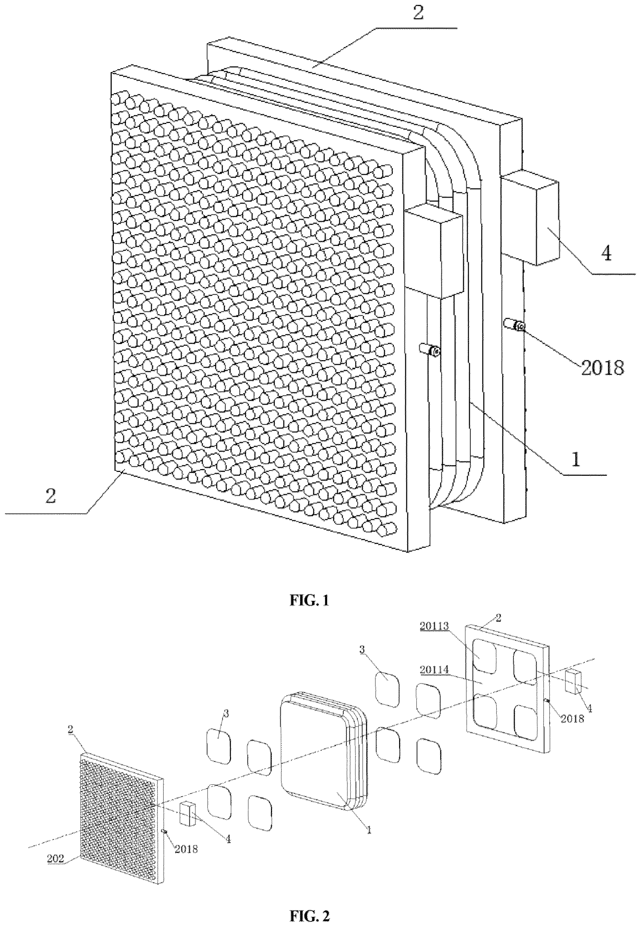

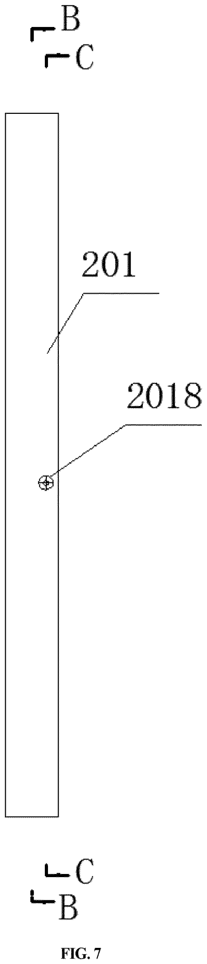

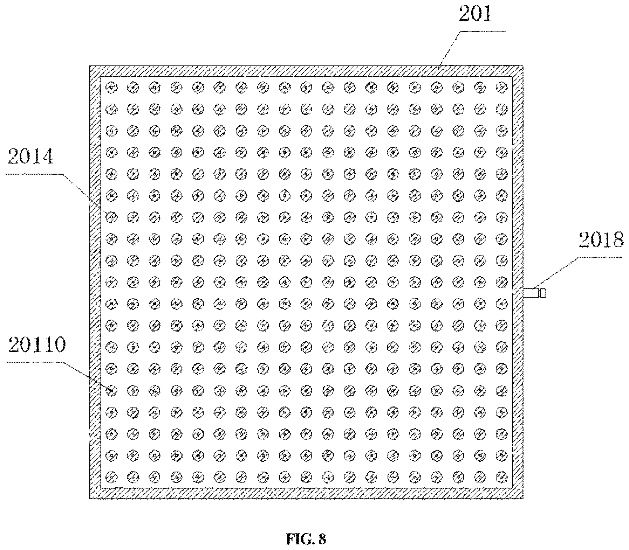

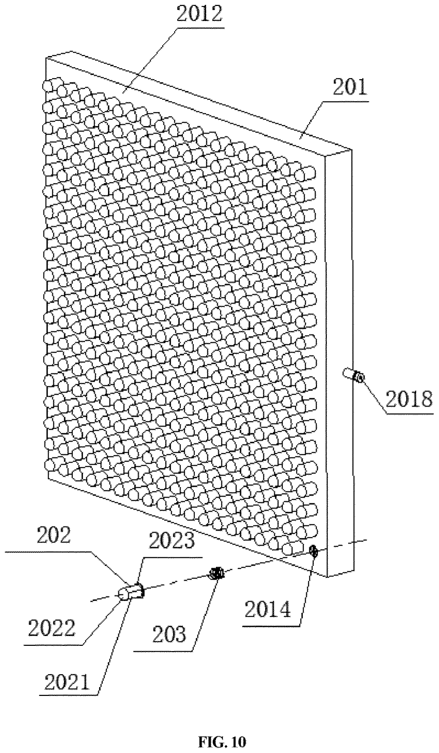

In an embodiment, as shown in FIG. 1 to FIG. 13, the elastic adaptive gap insertion reset apparatus includes a cushioning pad 1, adaptive plates 2, an electromagnet 3, and a controller 4.

The cushioning pad 1 is elastic. The two adaptive plates 2 are symmetrically distributed on two sides of the cushioning pad 1. Each adaptive plate 2 includes a panel 201, elastic posts 202, and springs 203. The panel 201 includes a bottom cover 2011 close to the cushioning pad 1 and a top cover 2012 away from the cushioning pad 1. A plurality of rows and a plurality of columns of elastic post holes 2013 are provided in an array in the top cover 2012. Spring seats 2014 having a one-to-one correspondence with the elastic post holes 2013 are distributed in an array in the panel 201. A first end of each spring seat 2014 is fixedly arranged on the bottom cover 2011. A second end of the spring seat 2014 is located in a corresponding elastic post hole 2013 and is flush with an outer surface of the top cover 2012. An expansion groove 2015 is provided in each spring seat 2014. A first end of the expansion groove 2015 is located at the second end of the spring seat 2014. A second end of the expansion groove 2015 is located in the spring seat 2014. An air blow cavity 2016 is provided in each spring seat 2014. A first end of the air blow cavity 2016 extends to the first end of the spring seat 2014. A second end of the air blow cavity 2016 extends into the expansion groove 2015. A push member 2017 is arranged in the air blow cavity 2016. The push member 2017 is movable in a length direction of the air blow cavity 2016. The push member 2017 is configured to press the expansion groove 2015 or press a cavity wall of the air blow cavity 2016 close to the second end of the air blow cavity. An air passage structure in communication with each air blow cavity 2016 is arranged in the bottom cover 2011. The air passage structure includes a limit air nozzle 2018 protruding from the panel 201. The elastic post 202 includes a post body 2021 and a post cap 2022. The post body 2021 is a hollow structure and is arranged on an exterior of a corresponding spring seat. Each post cap 2022 is arranged at an end of the post body 2021. Each spring 203 is arranged in a corresponding post body 2021. One end of the spring abuts against the second end of the spring seat 2014, and the other end of the spring abuts against the post cap 2022. A plurality of groups of electromagnets 3 are arranged. Each group of electromagnets 3 includes two electromagnets 3 arranged opposite to each other and respectively arranged on the two sides of the cushioning pad 1. The controller 4 is respectively electrically connected to each electromagnet 3.

In this embodiment, a cushioning pad 1 is arranged between two adaptive plates 2. The cushioning pad 1 has both the damping function and the function of connecting the two adaptive plates 2, so that the damping in construction nodes can be increased, and the energy consumption capability and the shock resistance capability of the nodes in earthquakes can be increased. During use, pressure may be applied to panels 201 on left and right sides of the entire elastic adaptive gap insertion reset apparatus, to compress the cushioning pad 1. When the thickness of the entire elastic adaptive gap insertion reset apparatus is less than the width of a gap to be caulked, the elastic adaptive gap insertion reset apparatus may be readily caulked in the gap. After the elastic adaptive gap insertion reset apparatus is caulked in the gap, the pressure on the panels 201 is released, that is, the compression of the cushioning pad 1 is released. A compression amount of the cushioning pad 1 is released. The elastic posts 202 and the springs 203 therein are partially compressed according to the flatness of the two sidewalls of the gap, to complete the adaptive adjustment for nonplanar sidewalls. Next, an air pump is externally connected to a limit air nozzle 2018 to feed high-pressure air into the air passage structure. The high-pressure air enters each air blow cavity 2016 through the air passage structure to blow up the push member 2017. The push member 2017 presses the expansion groove 2015 or presses a cavity wall of the air blow cavity 2016 close to a second end of the air blow cavity. The expansion groove 2015 expands outward to tightly press the inner wall of the post body 2021. The structures on two sides of the expansion groove 2015 press the post body 2021 and has large force of friction with the inner wall of the post body 2021 to tightly press the elastic post 202, so that a position of the adaptively adjusted elastic post 202 is locked in each elastic post hole 2013. Next, the electromagnets 3 are energized to keep the polarity of each group of opposite electromagnets 3 the same, the real-time value of the repulsion between each group of opposite electromagnets 3 is recorded as an initial value of deformation monitoring of a gap node construction member, and simultaneously a real-time value of a magnetic force of each electromagnet 3 is recorded as a backtracking value for stopping restoring support. During an earthquake, the cushioning pad 1 provides adequate damping, thereby improving the energy consumption capability and the shock resistance capability of the nodes in earthquakes. After the earthquake occurs, the gap has undergone changes in position and shape, the magnitude and polarity of magnetic forces of one group of opposite electromagnets 3 are first controlled to make the electromagnets 3 repel or attract each other with a relatively large magnetic force, to drive the adjustment of the spacing between adaptive plates 2. Next, the magnetic force value of each electromagnet 3 is adjusted to the backtracking value, and the repulsion between each group of opposite electromagnets 3 is observed. The adjustment is stopped if the initial value is reached, and the adjustment continues if the initial value is not reached, until the repulsion between each group of electromagnets 3 reaches the initial value. When the initial value is reached, it indicates that the spacing of the gap returns to the state before deformation, and the member is restored. Therefore, the elastic adaptive gap insertion reset apparatus has functions such as caulking, monitoring, and restoring and has high adaptability to nonplanar complex gap sidewalls such as rough and uneven surfaces and voids and pits.

Referring to FIG. 1 and FIG. 2, the elastic posts 202 located in the same horizontal direction are a row of elastic posts 202, and the elastic posts 202 located in the same vertical direction are a column of elastic posts 202. Next, referring to the figure, the elastic post holes 2013 located in the same horizontal direction are a row of elastic post holes 2013, and the elastic post holes 2013 located in the same vertical direction are a column of elastic post holes 2013.

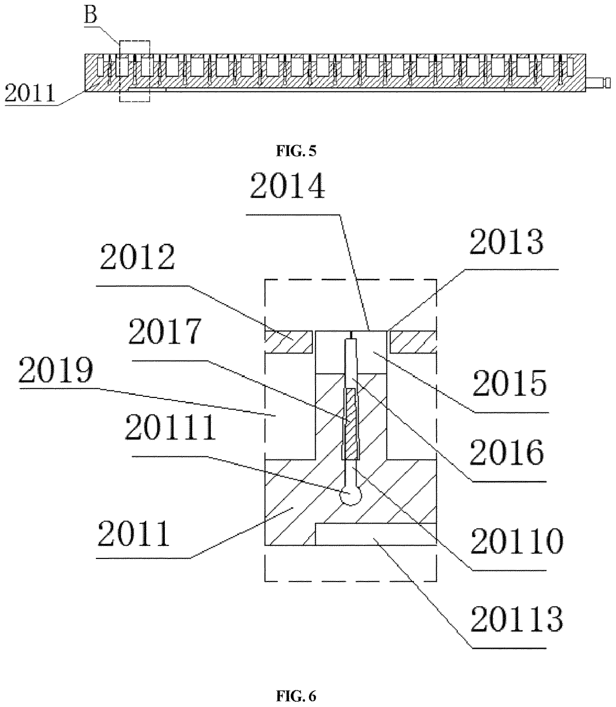

Based on the foregoing embodiments, in a preferred embodiment, referring to FIG. 5 and FIG. 6, each air blow cavity 2016 has a frustum shape, an area of the second end of the air blow cavity 2016 is less than an area of the first end of the air blow cavity 2016, correspondingly, each push member 2017 has a frustum shape, an area of a smaller end of the push member 2017 is slightly greater than the area of the second end of the air blow cavity 2016, an area of a larger end of the push member 2017 is less than the area of the first end of the air blow cavity 2016, and a length of the push member 2017 is less than a length of the air blow cavity 2016. In this embodiment, because the push member 2017 has a frustum shape, the area of the smaller end of the push member 2017 is slightly greater than the area of the second end of the air blow cavity 2016. The push member 2017 abuts against an inner wall of the air blow cavity 2016 close to the second end of the air blow cavity in a process of being blown up, to stretch the second end of the air blow cavity 2016 to press the expansion groove 2015, so that the expansion groove 2015 expands outward to tightly press the inner wall of the post body 2021 to tightly press the elastic posts 202. In addition, when the larger end of the push member 2017 is pushed to a position to have a cross-sectional area equal to that of the air blow cavity 2016, the position of the push member 2017 is locked, thereby further ensuring that the position of the adaptively adjusted elastic post 202 is locked in each elastic post hole 2013. In an alternative embodiment, the shape of the air blow cavity 2016 may be set to a cylindrical shape, and the shape of push member 2017 is correspondingly set to a cylindrical shape. The push member 2017 can be inserted in the expansion groove 2015 to make the expansion groove 2015 expand outward. After the supply of air into the limit air nozzle 2018 is stopped, the limit air nozzle 2018 is closed, and the push member 2017 is kept at a locked position depending on the air pressure inside the air passage structure. In another alternative embodiment, the shape of the air blow cavity 2016 is set to a frustum shape. The push member 2017 is set to a conical shape. The smaller end of the push member 2017 may be inserted in the expansion groove 2015. The cross-sectional area of the larger end of the push member 2017 is greater than the area of the second end of the air blow cavity 2016.

Based on the foregoing embodiments, in a preferred embodiment, a cavity 2019 is formed between the bottom cover 2011 and the top cover 2012, each spring seat 2014 is located in the cavity 2019, each elastic post 202 further includes an annular post base 2023 fixedly arranged at an end of the post body 2021 away from the post cap 2022, and the annular post base 2023 is sleeved over the spring seat 2014 and is movably located between a top wall and a bottom wall of the cavity 2019. In this embodiment, after the elastic adaptive gap insertion reset apparatus is caulked in the gap, the pressure on the panels 201 is released, that is, the compression of the cushioning pad 1 is released. A compression amount of the cushioning pad 1 is released. The elastic posts 202 and the springs 203 therein are partially compressed according to the flatness of the two sidewalls of the gap. The elastic posts 202 is compressed by the sidewalls of the gap to move along an outer wall of the spring seat 2014. The springs 203 inside the elastic posts 202 are compressed, and the elastic posts 202 do not deform.

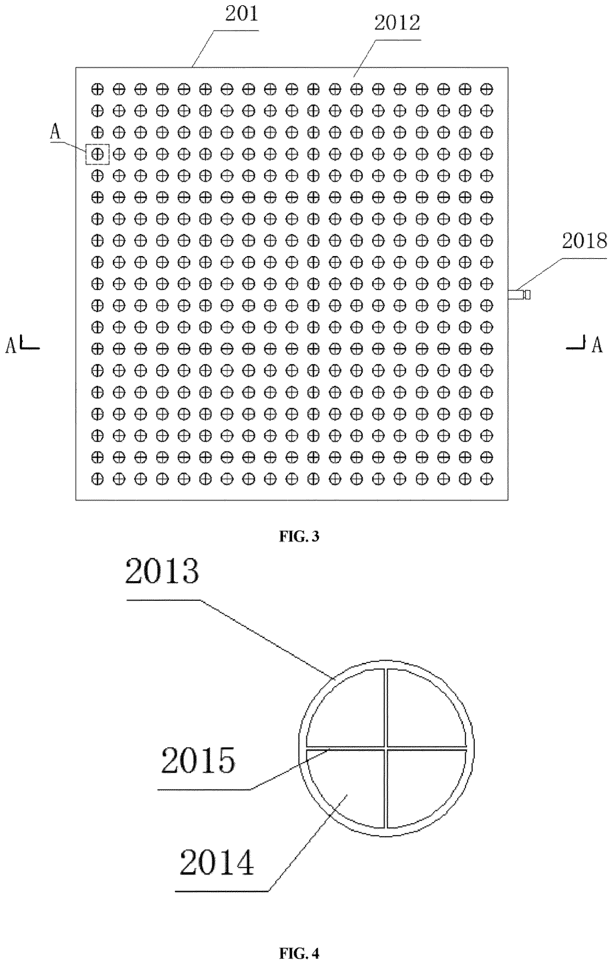

Based on the foregoing embodiments, in a preferred embodiment, as shown in FIG. 3 and FIG. 4, the expansion groove 2015 is a cross-shaped groove. In this embodiment, the expansion groove 2015 is cross-shaped. The expansion groove 2015 divides the top of the spring seat 2014 into four sector-shaped structures. When the second end of the expansion groove 2015 is pressed, the four sector-shaped structures press the elastic posts 202 outward. In an alternative embodiment, the expansion groove 2015 may have another shape, and includes, for example, a vertical groove that is located at the center and at least three radial grooves that evenly divide the spring seat 2014 into at least three sector-shaped structures.

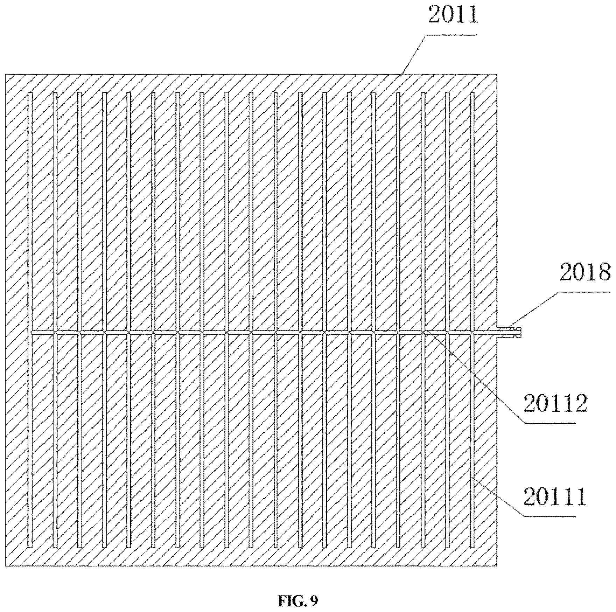

Based on the foregoing embodiments, in a preferred embodiment, as shown in FIG. 9, the air passage structure includes a sub-air passage 20110, a branch air passage 20111, and a main air passage 20112. The sub-air passage 20110 is in communication with a corresponding air blow cavity 2016. The sub-air passage 20110 is perpendicular to the bottom cover 2011. A plurality of branch air passages 20111 are provided. Each branch air passage 20111 is in communication with sub-air passages 20110 in one column. The branch air passages 20111 are parallel to an outer surface of the bottom cover 2011 facing the cushioning pad 1. One main air passage 20112 is provided. The main air passage 20112 is in communication with the plurality of branch air passages 20111. The main air passage 20112 is perpendicular to the branch air passage 20111 and is parallel to the outer surface of the bottom cover 2011 facing the cushioning pad 1. The limit air nozzle 2018 is connected to the main air passage 20112. In this embodiment, after the adaptive plates 2 are adaptively adjusted, an air pump is externally connected to the limit air nozzle 2018 to feed high-pressure air into the main air passage 20112. The high-pressure air passes through the branch air passages 20111 to enter the sub-air passages 20110, then enters each air blow cavity 2016 to blow up the push member 2017. The push member 2017 presses the expansion groove 2015. The expansion groove 2015 expands outward to tightly press the inner wall of the post body 2021 to tightly press the elastic posts 202. The position of each adaptively adjusted elastic post 202 is locked in each elastic post hole 2013. One main air passage 20112 and a plurality of branch air passages 20111 are provided, so that high-pressure air can be evenly fed into each air blow cavity 2016. Certainly, in other alternative embodiments, the air passage structure may be disposed in another air passage form that can feed high-pressure air into each air blow cavity 2016.

Optionally, based on the foregoing embodiments, in a preferred embodiment, referring to FIG. 2, a plurality of first limit grooves 20113 are provided in the bottom cover 2011, and the electromagnets 3 are arranged in the first limit grooves 20113. In the embodiment, the first limit grooves 20113 are provided in the bottom cover 2011 to facilitate the mounting and fixing of the electromagnets 3. Specifically, a quantity of the first limit grooves 20113 in one bottom cover 2011 is equal to a quantity of groups of the electromagnets 3. A cross-sectional size of each first limit groove 20113 is consistent when a cross-sectional size of each electromagnet 3. In an alternative embodiment, the first limit grooves 20113 may be omitted, and the electromagnets 3 are fixed on the bottom cover 2011 by bonding. In another alternative embodiment, the electromagnets 3 may be fixed at two ends of the cushioning pad 1 by bonding.

Based on the foregoing embodiments, in a preferred embodiment, further referring to FIG. 2, a second limit groove 20114 is further provided in the bottom cover 2011, the cushioning pad 1 is arranged in the second limit groove 20114, each first limit groove 20113 is provided at a groove bottom of the second limit groove 20114, and the depth of the first limit groove 20113 is equal to the thickness of the electromagnet 3. In this embodiment, the second limit groove 20114 is provided in the bottom cover 2011 to facilitate the mounting and fixing of the cushioning pad 1. In addition, the first limit grooves 20113 are provided at the groove bottom of the second limit groove 20114, and the depth of the first limit groove 20113 is equal to the thickness of the electromagnet 3, so that after the electromagnet 3 is fixed in the first limit grooves 20113, an end surface of the electromagnet 3 is flush with the groove bottom of the second limit groove 20114, causing no interference with the mounting of the cushioning pad 1.

Based on the foregoing embodiments, in a preferred embodiment, four groups of electromagnets 3 are arranged and are respectively arranged near four corners of the bottom cover 2011. In this embodiment, four groups of electromagnets 3 are arranged and are respectively arranged near four corners of the bottom cover 2011, so that multi-point synchronous deformation monitoring of gap nodes can be completed, and meanwhile magnetic force-based node restoration can be completed according to detection values. Certainly, in other alternative embodiments, more electromagnets 3 may be arranged.

Based on the foregoing embodiments, in a preferred embodiment, two controllers 4 are arranged and are respectively arranged on two panels 201, and each controller 4 is respectively electrically connected to a plurality of electromagnets 3 arranged on the same side of the cushioning pad 1. In this embodiment, two controllers 4 are arranged, to facilitate monitoring and recording of each electromagnet 3. In addition, the controllers 4 are arranged on the panel 201. After the elastic adaptive gap insertion reset apparatus is caulked in a gap, the controllers 4 are also fixed accordingly. The entire elastic adaptive gap insertion reset apparatus is integrated. Certainly, in other alternative embodiments, only one controller 4 may be arranged.

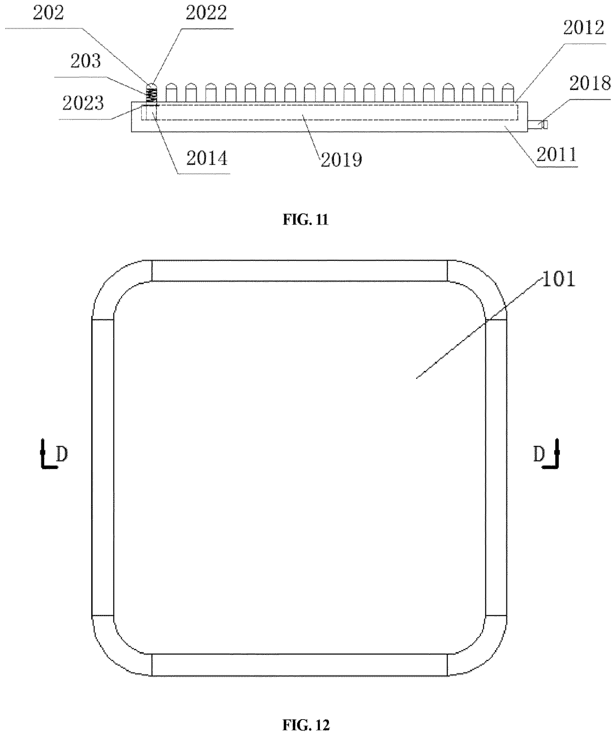

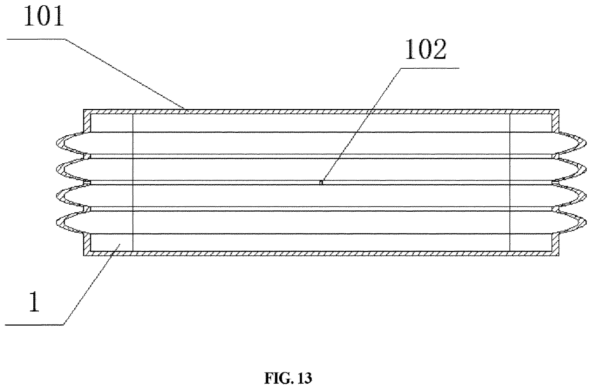

Based on the foregoing embodiments, in a preferred embodiment, the cushioning pad 1 has a hollow cavity. An air hole 102 in communication with the hollow cavity is provided in a sidewall of the cushioning pad 1. The sidewall of the cushioning pad 1 has a corrugated shape. Referring to FIG. 12 and FIG. 13, the top and bottom of the cushioning pad 1 are both sealed by the bottom plates 101. Each sidewall of the cushioning pad 1 is provided with an air hole 102, to discharge air when the cushioning pad 1 is impacted. The stiffness of the cushioning pad 1 is greater than the stiffness of a spring 203 and is elastic, and the cushioning pad may restore under the elasticity thereof to suck air, thereby implementing air cushioning, so that the damping in construction nodes can be increased, and the energy consumption capability and the shock resistance capability of the nodes in earthquakes can be increased.

In a specific embodiment, the cushioning pad 1 is made of an aromatic polyamide reinforced material.

### Embodiment 2

This embodiment further provides a caulking monitoring restoring apparatus, applied to the elastic adaptive gap insertion reset apparatus provided in the foregoing embodiment. The caulking restoring method includes the following steps.

S 1. Compress the cushioning pad 1 to make a total thickness of the elastic adaptive caulking restoring apparatus less than a width of a gap to be caulked. Specifically, pressure may be applied to panels 201 on left and right sides of the entire elastic adaptive gap insertion reset apparatus, to compress the cushioning pad 1. When the thickness of the entire elastic adaptive gap insertion reset apparatus is less than the width of a gap to be caulked, the elastic adaptive gap insertion reset apparatus may be readily caulked in the gap.

S2. Insert the elastic adaptive caulking restoring apparatus into the gap, and release the compression of the cushioning pad 1, where at least part of the elastic posts 202 and the springs 203 therein are compressed by a sidewall of the gap. Specifically, after the elastic adaptive gap insertion reset apparatus is caulked in the gap, the pressure on the panels 201 is released, that is, the compression of the cushioning pad 1 is released. A compression amount of the cushioning pad 1 is released. The elastic posts 202 and the springs 203 therein are partially compressed according to the flatness of the two sidewalls of the gap, to complete the adaptive adjustment for nonplanar sidewalls.

S3. Externally connect an air pump to the limit air nozzle 2018 to feed high-pressure air into the air passage structure, where the air enters each air blow cavity 2016 to blow up the push member 2017, the push member 2017 presses the expansion groove 2015, and the expansion groove 2015 expands outward to tightly press the elastic post 202, so that a position of the elastic post 202 is locked in each elastic post hole 2013. Specifically, the push member 2017 presses the expansion groove 2015. The expansion groove 2015 expands outward to tightly press the inner wall of the post body 2021. The structures on two sides of the expansion groove 2015 press the post body 2021 and has large force of friction with the inner wall of the post body 2021 to tightly press the elastic post 202, so that a position of the adaptively adjusted elastic post 202 is locked in each elastic post hole 2013.

S4. Energize the electromagnets 3 to make two opposite electromagnets 3 have the same polarity, record a real-time value of repulsion between each group of electromagnets 3 as an initial value of deformation monitoring of a gap node construction member, and simultaneously record a real-time value of a magnetic force of each electromagnet 3 as a backtracking value for stopping restoring support. Specifically, the controller 4 may control the polarity of the electromagnets 3 by controlling the directions of currents in the electromagnets 3. A pressure sensor may be arranged on a contact surface between the first limit grooves 20113 or the electromagnets 3 and the bottom cover 2011. The controller 4 is communicatively connected to the pressure sensor. The value of repulsion is monitored by monitoring the value of the pressure sensor. When the magnitude of the currents in the electromagnets 3 remains unchanged and the spacing between two electromagnets 3 does not change, the value of repulsion remains unchanged.

When the gap has undergone changes in position and shape, the caulking restoring method further includes:
S5. Adjust a spacing between the two adaptive plates 2 by adjusting magnitude and polarity of magnetic forces of the groups of opposite electromagnets 3. Specifically, the magnitude and polarity of the magnetic forces of the electromagnets 3 are adjusted by controlling the magnitude and directions of the current fed into the electromagnets 3. In this case, the electromagnets 3 may repel or attract each other with a relatively large magnetic force, to drive the rapid adjustment of the spacing between the two adaptive plates 2. Referring to FIG. 1 and FIG. 2, after the elastic adaptive gap insertion reset apparatus is caulked into a gap, the limit air nozzle 2018 is located on the outer side of the gap. It is defined that an end of the elastic adaptive gap insertion reset apparatus provided with the limit air nozzle 2018 is a protruding end, and an end inserted in the gap is an inserting end. When the member is horizontally twisted, the spacing between the two opposite electromagnets 3 in each group near the inserting end increases, and the spacing between the opposite electromagnets 3 in each group near the protruding end decreases. During restoring, it is implemented that the two opposite electromagnets 3 in each group near the inserting end attract with a relatively large magnetic force and the opposite electromagnets 3 in each group near the protruding end repel with a relatively large magnetic force, to rapid adjusting the spacing between the two adaptive plates 2, and the adaptive plates 2 support the member to restore during movement.
S6. Adjust the magnetic force of each electromagnet 3 to the backtracking value until the repulsion between each group of electromagnets 3 reaches the initial value. Specifically, the magnetic force value of each electromagnet 3 is adjusted to the backtracking value, and the repulsion between each group of opposite electromagnets 3 is observed. The adjustment is stopped if the initial value is reached, and step S5 continues to be repeated if the initial value is not reached, until the repulsion between each group of electromagnets 3 reaches the initial value. When the magnetic force of each electromagnet 3 is adjusted to the backtracking value and the repulsion between each group of electromagnets 3 reaches the initial value, it indicates that the member is restored.

## Claims

1. An elastic adaptive caulking restoring apparatus, comprising:
a cushioning pad (1);
two adaptive plates (2), symmetrically distributed on two sides of the cushioning pad (1), wherein each adaptive plate (2) comprises a panel (201), elastic posts (202), and springs (203), the panel (201) comprises a bottom cover (2011) close to the cushioning pad (1) and a top cover (2012) away from the cushioning pad (1), a plurality of rows and a plurality of columns of elastic post holes (2013) are provided in an array in the top cover (2012), spring seats (2014) having a one-to-one correspondence with the elastic post holes (2013) are distributed in an array in the panel (201), a first end of each spring seat (2014) is fixedly arranged on the bottom cover (2011), a second end of the spring seat (2014) is located in a corresponding elastic post hole (2013) and is flush with an outer surface of the top cover (2012), an expansion groove (2015) is provided in each spring seat (2014), a first end of the expansion groove (2015) is located at the second end of the spring seat (2014), a second end of the expansion groove (2015) is located in the spring seat (2014), an air blow cavity (2016) is provided in each spring seat (2014), a first end of the air blow cavity (2016) extends to the first end of the spring seat (2014), a second end of the air blow cavity (2016) extends into the expansion groove (2015), a push member (2017) is arranged in the air blow cavity (2016), the push member (2017) is movable in a length direction of the air blow cavity (2016), the push member (2017) is configured to press the expansion groove (2015) or press a cavity wall of the air blow cavity (2016) close to the second end of the air blow cavity, an air passage structure in communication with each air blow cavity (2016) is arranged in the bottom cover (2011), the air passage structure comprises a limit air nozzle (2018) protruding from the panel (201), the elastic post (202) comprises a post body (2021) and a post cap (2022), the post body (2021) is a hollow structure and is arranged on an exterior of a corresponding spring seat (2014), each post cap (2022) is arranged at an end of the post body (2021), each spring (203) is arranged in a corresponding post body (2021), one end of the spring abuts against the second end of the spring seat (2014), and the other end of the spring abuts against the post cap (2022);
a plurality of groups of electromagnets (3), wherein each group of electromagnets (3) comprises two electromagnets (3) arranged opposite to each other and respectively arranged on the two sides of the cushioning pad (1); and
a controller (4), respectively electrically connected to each electromagnet (3).

2. The elastic adaptive caulking restoring apparatus according to claim 1, wherein each air blow cavity (2016) has a frustum shape, an area of the second end of the air blow cavity (2016) is less than an area of the first end of the air blow cavity (2016), correspondingly, each push member (2017) has a frustum shape, an area of a smaller end of the push member (2017) is slightly greater than the area of the second end of the air blow cavity (2016), an area of a larger end of the push member (2017) is less than the area of the first end of the air blow cavity (2016), and a length of the push member (2017) is less than a length of the air blow cavity (2016).

3. The elastic adaptive caulking restoring apparatus according to claim 1, wherein a cavity (2019) is formed between the bottom cover (2011) and the top cover (2012), each spring seat (2014) is located in the cavity (2019), each elastic post (202) further comprises an annular post base (2023) fixedly arranged at an end of the post body (2021) away from the post cap (2022), and the annular post base (2023) is sleeved over the spring seat (2014) and is movably located between a top wall and a bottom wall of the cavity (2019).

4. The elastic adaptive caulking restoring apparatus according to claim 1, wherein the expansion groove (2015) is a cross-shaped groove.

5. The elastic adaptive caulking restoring apparatus according to claim 1, wherein the air passage structure comprises:
sub-air passages (20110), each in communication with a corresponding air blow cavity (2016), wherein the sub-air passages (20110) are perpendicular to the bottom cover (2011);
a plurality of branch air passages (20111), each branch air passage (20111) is in communication with sub-air passages (20110) in one column, and the branch air passages (20111) are parallel to an outer surface of the bottom cover (2011) facing the cushioning pad (1); and
one main air passage (20112), wherein the main air passage (20112) is in communication with the plurality of branch air passages (20111), the main air passage (20112) is perpendicular to the branch air passage (20111) and is parallel to the outer surface of the bottom cover (2011) facing the cushioning pad (1), and the limit air nozzle (2018) is connected to the main air passage (20112)

6. The elastic adaptive caulking restoring apparatus according to any one of claims 1 to 5, wherein a plurality of first limit grooves (20113) are provided in the bottom cover (2011), and the electromagnets (3) are arranged in the first limit grooves (20113).

7. The elastic adaptive caulking restoring apparatus according to claim 6, wherein a second limit groove (20114) is further provided in the bottom cover (2011), the cushioning pad (1) is arranged in the second limit groove (20114), each first limit groove (20113) is provided at a groove bottom of the second limit groove (20114), and a depth of the first limit groove (20113) is equal to a thickness of the electromagnet (3).

8. The elastic adaptive caulking restoring apparatus according to any one of claims 1 to 5, wherein four groups of electromagnets (3) are arranged and are respectively arranged near four corners of the bottom cover (2011); and/or
two controllers (4) are arranged and are respectively arranged on two panels (201), and each controller (4) is respectively electrically connected to a plurality of electromagnets (3) arranged on the same side of the cushioning pad (1).

9. The elastic adaptive caulking restoring apparatus according to any one of claims 1 to 5, wherein the cushioning pad (1) has a hollow cavity, an air hole (102) in communication with the hollow cavity is provided in a sidewall of the cushioning pad (1), and the sidewall of the cushioning pad (1) has a corrugated shape.

10. A caulking restoring method, applied to the elastic adaptive caulking restoring apparatus according to any one of claims 1 to 9, wherein the caulking restoring method comprises:
S1. compressing the cushioning pad (1) to make a total thickness of the elastic adaptive caulking restoring apparatus less than a width of a gap to be caulked;
S2. inserting the elastic adaptive caulking restoring apparatus into the gap, and releasing the compression of the cushioning pad (1), wherein at least part of the elastic posts (202) and the springs (203) therein are compressed by a sidewall of the gap;
S3. externally connecting an air pump to the limit air nozzle (2018) to feed high-pressure air into the air passage structure, wherein the air enters each air blow cavity (2016) to blow up the push member (2017), the push member (2017) presses the expansion groove (2015), and the expansion groove (2015) expands outward to tightly press the elastic post (202), so that a position of the elastic post (202) is locked in each elastic post hole (2013); and
S4. energizing the electromagnets (3) to make two opposite electromagnets (3) have the same polarity, recording a real-time value of repulsion between each group of electromagnets (3) as an initial value of deformation monitoring of a gap node construction member, and simultaneously recording a real-time value of a magnetic force of each electromagnet (3) as a backtracking value for stopping restoring support; and
when the gap has undergone changes in position and shape, the caulking restoring method further comprises:
S5. adjusting a spacing between the two adaptive plates (2) by adjusting magnitude and polarity of magnetic forces of the groups of opposite electromagnets (3); and
S6. adjusting the magnetic force of each electromagnet (3) to the backtracking value, and observing the repulsion between each group of electromagnets (3) and repeating the step S5 until the repulsion between each group of electromagnets (3) reaches the initial value.

## Patentansprüche

1. Vorrichtung zur elastischen adaptiven Verstemmungswiederherstellung, die Folgendes umfasst:
ein Polsterkissen (1);
zwei adaptive Platten (2), symmetrisch verteilt auf zwei Seiten des Polsterkissens (1), wobei jede adaptive Platte (2) ein Paneel (201), elastische Pfosten (202) und Federn (203) umfasst, wobei das Paneel (201) eine untere Abdeckung (2011) nahe dem Polsterkissen (1) und eine obere Abdeckung (2012) entfernt vom Polsterkissen (1) umfasst, wobei mehrere Reihen und mehrere Spalten von elastischen Pfostenlöchern (2013) in einer Anordnung in der oberen Abdeckung (2012) bereitgestellt sind, wobei Federsitze (2014), die eine Eins-zu-Eins-Entsprechung mit den elastischen Pfostenlöchern (2013) aufweisen, in einer Anordnung im Paneel (201) verteilt sind, wobei ein erstes Ende jedes Federsitzes (2014) fest an der unteren Abdeckung (2011) angeordnet ist, wobei ein zweites Ende des Federsitzes (2014) in einem entsprechenden elastischen Pfostenloch (2013) befindlich ist und bündig mit einer äußeren Oberfläche der oberen Abdeckung (2012) ist, wobei eine Ausdehnungsnut (2015) in jedem Federsitz (2014) bereitgestellt ist, wobei ein erstes Ende der Ausdehnungsnut (2015) am zweiten Ende des Federsitzes (2014) befindlich ist, wobei ein zweites Ende der Ausdehnungsnut (2015) im Federsitz (2014) befindlich ist, wobei ein Luftblashohlraum (2016) in jedem Federsitz (2014) bereitgestellt ist, wobei sich ein erstes Ende des Luftblashohlraums (2016) zum ersten Ende des Federsitzes (2014) erstreckt, sich ein zweites Ende des Luftblashohlraums (2016) in die Ausdehnungsnut (2015) erstreckt, ein Drückelement (2017) im Luftblashohlraum (2016) angeordnet ist, wobei das Drückelement (2017) in einer Längsrichtung des Luftblashohlraums (2016) bewegbar ist, wobei das Drückelement (2017) dazu ausgelegt ist, die Ausdehnungsnut (2015) zu drücken oder die Hohlraumwand des Luftblashohlraums (2016) nahe des zweiten Endes des Luftblashohlraums zu drücken, wobei eine Luftdurchgangsstruktur in Kommunikation mit jedem Luftblashohlraum (2016) in der unteren Abdeckung (2011) angeordnet ist, wobei die Luftdurchgangsstruktur eine Luftbegrenzungsdüse (2018) umfasst, die aus dem Paneel (201) herausragt, wobei der elastische Pfosten (202) einen Pfostenkörper (2021) und eine Pfostenkappe (2022) umfasst, wobei der Pfostenkörper (2021) eine hohle Struktur ist und an einer Außenseite eines entsprechenden Federsitzes (2014) angeordnet ist, wobei jede Pfostenkappe (2022) an einem Ende des Pfostenkörpers (2021) angeordnet ist, wobei jede Feder (203) in einem entsprechenden Pfostenkörper (2021) angeordnet ist, wobei ein Ende der Feder am zweiten Ende des Federsitzes (2014) anliegt und das andere Ende der Feder an der Pfostenkappe (2022) anliegt;
mehrere Gruppen von Elektromagneten (3), wobei jede Gruppe von Elektromagneten (3) zwei Elektromagneten (3) umfasst, die einander gegenüberliegend angeordnet und entsprechend auf den zwei Seiten des Polsterkissens (1) angeordnet sind; und
eine Steuerung (4), entsprechend mit jedem Elektromagneten (3) elektrisch verbunden.

2. Vorrichtung zur elastischen adaptiven Verstemmungswiederherstellung nach Anspruch 1, wobei jeder Luftblashohlraum (2016) eine Stumpfform aufweist, wobei eine Fläche des zweiten Endes des Luftblashohlraums (2016) kleiner als eine Fläche des ersten Endes des Luftblashohlraums (2016) ist, wobei, entsprechend, jedes Drückelement (2017) eine Stumpfform aufweist, wobei eine Fläche eines kleineren Endes des Drückelements (2017) geringfügig größer als die Fläche des zweiten Endes des Luftblashohlraums (2016) ist, eine Fläche des größeren Ende des Drückelements (2017) kleiner als die Fläche des ersten Endes des Luftblashohlraums (2016) ist und eine Länge des Drückelements (2017) kleiner als eine Länge des Luftblashohlraums (2016) ist.

3. Vorrichtung zur elastischen adaptiven Verstemmungswiederherstellung nach Anspruch 1, wobei ein Hohlraum (2019) zwischen der unteren Abdeckung (2011) und der oberen Abdeckung (2012) gebildet ist, wobei jeder Federsitz (2014) im Hohlraum (2019) befindlich ist, jeder elastische Pfosten (202) ferner eine ringförmige Pfostenbasis (2023) umfasst, die fest an einem Ende des Pfostenkörpers (2021) entfernt von der Pfostenkappe (2022) angeordnet ist, und wobei die ringförmige Pfostenbasis (2023) über den Federsitz (2014) gezogen ist und bewegbar zwischen einer oberen Wand und einer unteren Wand des Hohlraums (2019) positioniert ist.

4. Vorrichtung zur elastischen adaptiven Verstemmungswiederherstellung nach Anspruch 1, wobei die Ausdehnungsnut (2015) eine kreuzförmige Nut ist.

5. Vorrichtung zur elastischen adaptiven Verstemmungswiederherstellung nach Anspruch 1, wobei die Luftdurchgangsstruktur Folgendes umfasst:
Teilluftdurchgänge (20110), jeder in Kommunikation mit einem entsprechenden Luftblashohlraum (2016), wobei die Teilluftdurchgänge (20110) senkrecht zur unteren Abdeckung (2011) sind;
mehrere Verzweigungsluftdurchgänge (20111), wobei jeder Verzweigungsluftdurchgang (20111) in Kommunikation mit Teilluftdurchgängen (20110) in einer Spalte ist, und wobei die Verzweigungsluftdurchgänge (20111) parallel zu einer äußeren Oberfläche der unteren Abdeckung (2011) sind, die zum Polsterkissen (1) zeigt; und
einen Hauptluftdurchgang (20112), wobei der Hauptluftdurchgang (20112) in Kommunikation mit den mehreren Verzweigungsluftdurchgängen (20111) ist, wobei der Hauptluftdurchgang (20112) senkrecht zum Verzweigungsluftdurchgang (20111) ist und parallel zur äußeren Oberfläche der unteren Abdeckung (2011) ist, die zum Polsterkissen (1) zeigt, und wobei die Luftbegrenzungsdüse (2018) mit dem Hauptluftdurchgang (20112) verbunden ist.

6. Vorrichtung zur elastischen adaptiven Verstemmungswiederherstellung nach einem der Ansprüche 1 bis 5, wobei mehrere erste Begrenzungsnuten (20113) in der unteren Abdeckung (2011) bereitgestellt sind und die Elektromagneten (3) in den ersten Begrenzungsnuten (20113) angeordnet sind.

7. Vorrichtung zur elastischen adaptiven Verstemmungswiederherstellung nach Anspruch 6, wobei eine zweite Begrenzungsnut (20114) ferner in der unteren Abdeckung (2011) bereitgestellt ist, wobei das Polsterkissen (1) in der zweiten Begrenzungsnut (20114) angeordnet ist, wobei jede erste Begrenzungsnut (20113) an einem Nutboden der zweiten Begrenzungsnut (20114) bereitgestellt ist und wobei eine Tiefe der ersten Begrenzungsnut (20113) gleich einer Dicke des Elektromagneten (3) ist.

8. Vorrichtung zur elastischen adaptiven Verstemmungswiederherstellung nach einem der Ansprüche 1 bis 5, wobei vier Gruppen von Elektromagneten (3) angeordnet sind und entsprechend nahe vier Ecken der unteren Abdeckung (2011) angeordnet sind; und/oder wobei zwei Steuerungen (4) angeordnet sind und entsprechend an zwei Paneelen (201) angeordnet sind und wobei jede Steuerung (4) mit mehreren Elektromagneten (3), die auf der gleichen Seite des Polsterkissens (1) angeordnet sind, entsprechend elektrisch verbunden ist.

9. Vorrichtung zur elastischen adaptiven Verstemmungswiederherstellung nach einem der Ansprüche 1 bis 5, wobei das Polsterkissen (1) einen hohlen Hohlraum aufweist, wobei ein Luftloch (102) in Kommunikation mit dem hohlen Hohlraum in einer Seitenwand des Polsterkissens (1) bereitgestellt ist und die Seitenwand des Polsterkissens (1) eine gewellte Form aufweist.

10. Verfahren zur Wiederherstellung von Verstemmung, angewendet auf die Vorrichtung zur elastischen adaptiven Verstemmungswiederherstellung nach einem der Ansprüche 1 bis 9, wobei das Verfahren zur Wiederherstellung von Verstemmung Folgendes umfasst:
S1. Komprimieren des Polsterkissens (1), sodass eine Gesamtdicke der Vorrichtung zur elastischen adaptiven Verstemmungswiederherstellung kleiner als eine Breite eines zu verstemmenden Spalts gemacht wird;
S2. Einsetzen der Vorrichtung zur elastischen adaptiven Verstemmungswiederherstellung in den Spalt und Lösen der Komprimierung des Polsterkissens (1), wobei zumindest ein Teil der elastischen Pfosten (202) und der Federn (203) darin durch eine Seitenwand des Spalts zusammengedrückt werden;
S3. externes Verbinden einer Luftpumpe mit der Luftbegrenzungsdüse (2018) zum Einspeisen von Hochdruckluft in die Luftdurchgangsstruktur, wobei die Luft in jeden Luftblashohlraum (2016) eintritt, um das Drückelement (2017) nach oben zu blasen, wobei das Drückelement (2017) auf die Ausdehnungsnut (2015) drückt, und sich die Ausdehnungsnut (2015) nach außen ausdehnt, um fest auf den elastischen Pfosten (202) zu drücken, sodass eine Position des elastischen Pfostens (202) in jedem elastischen Pfostenloch (2013) verriegelt ist; und S4. Erregen der Elektromagneten (3), sodass zwei einander gegenüberliegende Elektromagneten (3) die gleiche Polarität aufweisen, Aufzeichnen eines Echtzeitwerts von Abstoßung zwischen jeder Gruppe von Elektromagneten (3) als einen anfänglichen Wert von Verformungsüberwachung eines Spaltknotenkonstruktionselements, und gleichzeitiges Aufzeichnen eines Echtzeitwerts einer magnetischen Kraft jedes Elektromagneten (3) als einen Rückverfolgungswert zum Anhalten der Wiederherstellungsunterstützung; und
wenn der Spalt Positions- und Formänderungen erfahren hat, umfasst das Verfahren zur Wiederherstellung von Verstemmung ferner:
S5. Anpassen eines Abstands zwischen den zwei adaptiven Platten (2) durch Anpassen der Größe und Polarität von magnetischen Kräften der Gruppen von einander gegenüberliegenden Elektromagneten (3); und
S6. Anpassen der magnetischen Kraft jedes Elektromagneten (3) an den Rückverfolgungswert und Beobachten der Abstoßung zwischen jeder Gruppe von Elektromagneten (3) und Wiederholen des Schritts S5, bis die Abstoßung zwischen jeder Gruppe von Elektromagneten (3) den anfänglichen Wert erreicht.

## Revendications

1. Appareil de restauration de calfeutrage adaptatif élastique, comportant :
un tampon (1) de rembourrage ;
deux plaques adaptatives (2), réparties symétriquement sur deux côtés du tampon (1) de rembourrage, chaque plaque adaptative (2) comportant un panneau (201), des plots élastiques (202) et des ressorts (203), le panneau (201) comportant un couvercle inférieur (2011) proche du tampon (1) de rembourrage et un couvercle supérieur (2012) écarté du tampon (1) de rembourrage, une pluralité de lignes et une pluralité de colonnes de trous (2013) pour plots élastiques étant placés en une matrice dans le couvercle supérieur (2012), des sièges (2014) de ressorts présentant une correspondance biunivoque avec les trous (2013) pour plots élastiques étant répartis en une matrice dans le panneau (201), une première extrémité de chaque siège (2014) de ressort étant disposée de manière fixe sur le couvercle inférieur (2011), une seconde extrémité du siège (2014) de ressort étant située dans un trou (2013) pour plot élastique correspondant et affleurant une surface extérieure du couvercle supérieur (2012), une rainure (2015) de dilatation étant réalisée dans chaque siège (2014) de ressort, une première extrémité de la rainure (2015) de dilatation étant située à la seconde extrémité du siège (2014) de ressort, une seconde extrémité de la rainure (2015) de dilatation étant située dans le siège (2014) de ressort, une cavité (2016) de soufflage d'air étant aménagée dans chaque siège (2014) de ressort, une première extrémité de la cavité (2016) de soufflage d'air s'étendant jusqu'à la première extrémité du siège (2014) de ressort, une seconde extrémité de la cavité (2016) de soufflage d'air s'étendant jusque dans la rainure (2015) de dilatation, un organe (2017) de poussée étant disposé dans la cavité (2016) de soufflage d'air, l'organe (2017) de poussée pouvant être déplacé dans une direction de longueur de la cavité (2016) de soufflage d'air, l'organe (2017) de poussée étant configuré pour presser la rainure (2015) de dilatation ou presser une paroi de cavité de la cavité (2016) de soufflage d'air proche de la seconde extrémité de la cavité de soufflage d'air, une structure de passages d'air en communication avec chaque cavité (2016) de soufflage d'air étant disposée dans le couvercle inférieur (2011), la structure de passages d'air comportant une buse (2018) d'air de limitation faisant saillie à partir du panneau (201), le plot élastique (202) comportant un corps (2021) de plot et un capuchon (2022) de plot, le corps (2021) de plot étant une structure creuse et étant disposé sur l'extérieur d'un siège (2014) de ressort correspondant, chaque capuchon (2022) de plot étant disposé à une extrémité du corps (2021) de plot, chaque ressort (203) étant disposé dans un corps (2021) de plot correspondant, une extrémité du ressort prenant appui contre la seconde extrémité du siège (2014) de ressort, et l'autre extrémité du ressort prenant appui contre le capuchon (2022) de plot ;
une pluralité de groupes d'électroaimants (3), chaque groupe d'électroaimants (3) comportant deux électroaimants (3) disposés l'un en face de l'autre et disposés respectivement des deux côtés du tampon (1) de rembourrage ; et
une commande (4), respectivement reliée électriquement à chaque électroaimant (3).

2. Appareil de restauration de calfeutrage adaptatif élastique selon la revendication 1, chaque cavité (2016) de soufflage d'air présentant une forme en tronc de cône, une aire de la seconde extrémité de la cavité (2016) de soufflage d'air étant inférieure à une aire de la première extrémité de la cavité (2016) de soufflage d'air, de façon correspondante, chaque organe (2017) de poussée présentant une forme en tronc de cône, une aire d'une plus petite extrémité de l'organe (2017) de poussée étant légèrement supérieure à l'aire de la seconde extrémité de la cavité (2016) de soufflage d'air, une aire d'une plus grosse extrémité de l'organe (2017) de poussée étant inférieure à l'aire de la première extrémité de la cavité (2016) de soufflage d'air, et une longueur de l'organe (2017) de poussée étant inférieure à une longueur de la cavité (2016) de soufflage d'air.

3. Appareil de restauration de calfeutrage adaptatif élastique selon la revendication 1, une cavité (2019) étant formée entre le couvercle inférieur (2011) et le couvercle supérieur (2012), chaque siège (2014) de ressort étant situé dans la cavité (2019), chaque plot élastique (202) comportant en outre une base annulaire (2023) de plot disposée de manière fixe à une extrémité du corps (2021) de plot écartée du capuchon (2022) de plot, et la base annulaire (2023) de plot étant enfilée par-dessus le siège (2014) de ressort et étant situé de manière mobile entre une paroi supérieure et une paroi inférieure de la cavité (2019).

4. Appareil de restauration de calfeutrage adaptatif élastique selon la revendication 1, la rainure (2015) de dilatation étant une rainure en forme de croix.

5. Appareil de restauration de calfeutrage adaptatif élastique selon la revendication 1, la structure de passages d'air comportant :
des sous-passages (20110) d'air, chacun en communication avec une cavité (2016) de soufflage d'air correspondante, les sous-passages (20110) d'air étant perpendiculaires au couvercle inférieur (2011) ;
une pluralité de passages (20111) d'air de ramification, chaque passage (20111) d'air de ramification étant en communication avec des sous-passages (20110) d'air dans une colonne, et les passages (20111) d'air de ramification étant parallèles à une surface extérieure du couvercle inférieur (2011) faisant face au tampon (1) de rembourrage ; et
un passage principal (20112) d'air, le passage principal (20112) d'air étant en communication avec la pluralité de passages (20111) d'air de ramification, le passage principal (20112) d'air étant perpendiculaire au passage (20111) d'air de ramification et étant parallèles à la surface extérieure du couvercle inférieur (2011) faisant face au tampon (1) de rembourrage, et la buse (2018) d'air de limitation étant reliée au passage principal (20112) d'air.

6. Appareil de restauration de calfeutrage adaptatif élastique selon l'une quelconque des revendications 1 à 5, une pluralité de premières rainures (20113) de limitation étant réalisée dans le couvercle inférieur (2011), et les électroaimants (3) étant disposés dans les premières rainures (20113) de limitation.

7. Appareil de restauration de calfeutrage adaptatif élastique selon la revendication 6, une seconde rainure (20114) de limitation étant en outre réalisée dans le couvercle inférieur (2011), le tampon (1) de rembourrage étant disposé dans la seconde rainure (20114) de limitation, chaque première rainure (20113) de limitation étant réalisée au niveau d'un fond de rainure de la seconde rainure (20114) de limitation, et une profondeur de la première rainure (20113) de limitation étant égale à une épaisseur de l'électroaimant (3).

8. Appareil de restauration de calfeutrage adaptatif élastique selon l'une quelconque des revendications 1 à 5, quatre groupes d'électroaimants (3) étant disposés et étant respectivement disposés près de quatre coins du couvercle inférieur (2011) ; et/ou
deux commandes (4) étant disposées et étant respectivement disposées sur deux panneaux (201), et chaque commande (4) étant respectivement reliée électriquement à une pluralité d'électroaimants (3) disposés du même côté du tampon (1) de rembourrage.

9. Appareil de restauration de calfeutrage adaptatif élastique selon l'une quelconque des revendications 1 à 5, le tampon (1) de rembourrage présentant une cavité creuse, un trou (102) d'air en communication avec la cavité creuse étant pratiqué dans une paroi latérale du tampon (1) de rembourrage, et la paroi latérale du tampon (1) de rembourrage présentant une forme ondulée.

10. Procédé de restauration de calfeutrage, appliqué à l'appareil de restauration de calfeutrage adaptatif élastique selon l'une quelconque des revendications 1 à 9, le procédé de restauration de calfeutrage comportant les étapes consistant à :
S1. comprimer le tampon (1) de rembourrage pour rendre une épaisseur totale de l'appareil de restauration de calfeutrage adaptatif élastique inférieure à une largeur d'un écartement à calfeutrer ;
S2. insérer l'appareil de restauration de calfeutrage adaptatif élastique dans l'écartement, et relâcher la compression du tampon (1) de rembourrage, au moins une partie des plots élastiques (202) et des ressorts (203) qui s'y trouvent étant comprimée par une paroi latérale de l'écartement ;
S3. relier extérieurement une pompe à air à la buse (2018) d'air de limitation pour introduire de l'air sous haute pression dans la structure de passages d'air, l'air entrant dans chaque cavité (2016) de soufflage d'air pour gonfler l'organe (2017) de poussée, l'organe (2017) de poussée pressant la rainure (2015) de dilatation, et la rainure (2015) de dilatation se dilatant vers l'extérieur pour presser fortement le plot élastique (202), de telle sorte qu'une position du plot élastique (202) soit verrouillée dans chaque trou (2013) pour plot élastique ; et
S4. alimenter les électroaimants (3) pour faire en sorte que deux électroaimants (3) opposés présentent la même polarité, enregistrer une valeur en temps réel de répulsion entre chaque groupe d'électroaimants (3) en tant que valeur initiale de surveillance de déformation d'un élément de construction de noeud avec écartement, et enregistrer simultanément une valeur en temps réel d'une force magnétique de chaque électroaimant (3) en tant que valeur de recul pour arrêter de restaurer le soutien ; et
le procédé de restauration de calfeutrage comportant en outre, lorsque l'écartement a subi des changements de position et de forme, les étapes consistant à :
S5. régler un espacement entre les deux plaques adaptatives (2) en réglant le module et la polarité de forces magnétiques des groupes d'électroaimants (3) opposés ; et
S6. régler la force magnétique de chaque électroaimant (3) à la valeur de recul, et observer la répulsion entre chaque groupe d'électroaimants (3) et répéter l'étape S5 jusqu'à ce que la répulsion entre chaque groupe d'électroaimants (3) atteigne la valeur initiale.
